Europäisches Patentamt

European Patent Office

Office européen des brevets

(19)

(11) Veröffentlichungsnummer: **0 141 257 B1**

(12) **EUROPÄISCHE PATENTSCHRIFT**

(45) Veröffentlichungstag der Patentschrift:
03.05.89

(21) Anmeldenummer: **84111523.1**

(22) Anmeldetag: **27.09.84**

(51) Int. Cl.⁴: **C 03 B 37/04**

(54) **Vorrichtung zur Herstellung dünner Glasfasern, Keramikfasern oder dgl.**

(30) Priorität: **20.10.83 DE 3338081**

(43) Veröffentlichungstag der Anmeldung:
**15.05.85 Patentblatt 85/20**

(45) Bekanntmachung des Hinweises auf die Patenterteilung:
**03.05.89 Patentblatt 89/18**

(84) Benannte Vertragsstaaten:
**AT BE CH DE FR GB IT LI LU NL SE**

(56) Entgegenhaltungen:
**DE-C- 713 919**
**DE-C- 812 452**

(73) Patentinhaber: **Glaswerk Schuller GmbH, Faserweg 1,
D-6980 Wertheim/Main (DE)**

(72) Erfinder: **Schlachter, Fredo, Sattelhecke 21,
D-8752 Johannesberg (DE)**

(74) Vertreter: **Huss, Carl-Hans, Dipl.-Ing. et al, Patentanwalt
Griesstrasse 3 a Postfach 14 54,
D-8100 Garmisch-Partenkirchen (DE)**

## Beschreibung

Die Erfindung richtet sich auf die Herstellung dünner Glasfasern, Keramikfasern oder dergleichen mit Hilfe eines, flüssige Glasmasse aufnehmenden, in Umdrehung versetzten, meist und auch nachfolgend «Rotor» genannten Behälters, dessen Außenwandung ringförmig angeordnete Öffnungen aufweist, durch welche die durch die Umdrehung des Rotors entstehende Zentrifugalkraft Ströme der Glasmasse drückt, die beim Erkalten in Fasern sich zerteilende Fäden bilden. Zur Vereinfachung der Beschreibung sind nachfolgend nur Glasfasern angesprochen, ohne die Erfindung darauf einzuschränken.

Die Entwicklung ging, wie z.B. die DE-A-2 602 902 ausweist, den Weg zu immer mehr und immer feineren, nachfolgend «Massedüsen» genannten Öffnungen, um den Ausstoß zu erhöhen und von vorneherein die Bildung sehr dünner Fäden zu gewährleisten.

In der DE-A-2 602 902 sind 40 000 bis 100 000 Massedüsen genannt, und wenn man bedenkt, daß derartige Rotoren im allgemeinen einen Gesamtdurchmesser von 450 mm nicht übersteigen und ihre Mantelhöhen in der Regel nicht mehr als 60 mm betragen, wird klar, welche Schwierigkeiten entstehen, und daß diese Düsen kaum noch mechanisch, sondern heute eher mit Hilfe von Laserstrahlen in die Rotorwand einzubringen sind.

Ausgangsbasis der vorliegenden Erfindung ist die Überlegung, daß die Tendenz bei dergleichen, sozusagen «hochgezüchteten» Rotoren in eine Richtung geht, in der die Nachteile die Vorteile überwiegen. Die Einbringung so vieler und so feiner Massedüsen ist, abgesehen von der Schwierigkeit ihrer Fertigung selbst, nur in verhältnismäßig dünne Rotorwände möglich, die dann durch die Zentrifugalkraft an sich und durch die gegen die Innenseite der rot-weiß-glühenden Außenwand des Rotors gepreßte Glasmasse unstabil weden können und auch einer sonstigen erhöhten Beanspruchung ausgesetzt sind. Dies wirkt sich um so mehr aus, als mit feiner werdenden Düsen auch die Rotor-Drehzahl gesteigert werden muß, (z.B. 3000 U/min und mehr), um die Glasschmelze durch die Düsen zu zwingen. Diese führt in so kurzer Zeit zu einer Erweiterung der Massedüsen und bzw. oder zur Deformierung des Rotors, daß man mit einer Rotor-Standzeit von nur 10 bis 30 Stunden rechnet, ehe man einen derartigen Rotor bereits auswechseln oder zumindest ausrichten muß.

Außerdem muß man damit rechnen, daß sich so feine Düsen bei schon sehr geringen Unregelmäßigkeiten, z.B. Unreinigkeiten in der Glasschmelze oder Viskositätsschwankungen zusetzen, was während des Betriebes nicht korrigiert werden kann. Wenn sich ein bestimmter Prozentsatz von Düsen zugesetzt hat, muß deshalb eine Produktionsunterbrechung zwecks Reinigung hingenommen werden.

Die Erfindung kehrt deshalb zu weniger Massedüsen größeren Durchmessers zurück, durch die die Primärfäden erzeugt weden, die außerhalb des Rotors in Unterstützung der Zentrifugalkraft durch besonders gerichtete Gas- und bzw. oder Heißgasströme zu dünnen Fäden weiter ausgezogen werden. Solche Vorrichtungen sind bekannt, jedoch mit Nachteilen behaftet, die ihren großtechnischen Einsatz verhinderten. So zeigt und beschreibt z.B. die DE-C-812 452 eine Vorrichtung mit einem Rotor, der sich innerhalb einer Verbrennungskammer dreht, die mit eine Expansionsöffnung in Form eines kreisförmigen Schlitzes versehen ist, der in der Ebene der Massedüsen im Rotor liegt. Dabei ist der Durchmesser des Schlitzes der Verbrennungskammer erheblich größer als der Außendurchmesser des Rotors und damit als der Durchmesser, auf dem die Massedüsen liegen. Damit werden die Glasfäden innerhalb der Verbrennungskammer durch einen Gasstrom ausgezogen. Die Düsen sind lediglich als Öffnungen in der Rotorwand ausgebildet, so daß der Rotor unbrauchbar wird, wenn die Düsen ausgewaschen sind.

Ausgehend vom vorstehend beschriebenen Stand der Technik lag der Erfindung die Aufgabe zugrunde, bei der Herstellung dünner Glasfäden nach dem Rotationsverfahren jene Nachteile auszuschalten, welche die erkennbare Tendenz zu immer mehr und immer feineren Düsen mit sich bringt und die an sich bekannte Erzeugung dünner Fäden aus Primärfäden durch gerichtete Gasströme zu intensivieren und effektiver zu machen.

Diese Aufgabe wird erfindungsgemäß durch die im Kennzeichen des Patentanspruchs 1 angegebenen Merkmale gelöst. Vorteilhafte Ausgestaltungen der Erfindung sind in den Unteransprüchen gekennzeichnet.

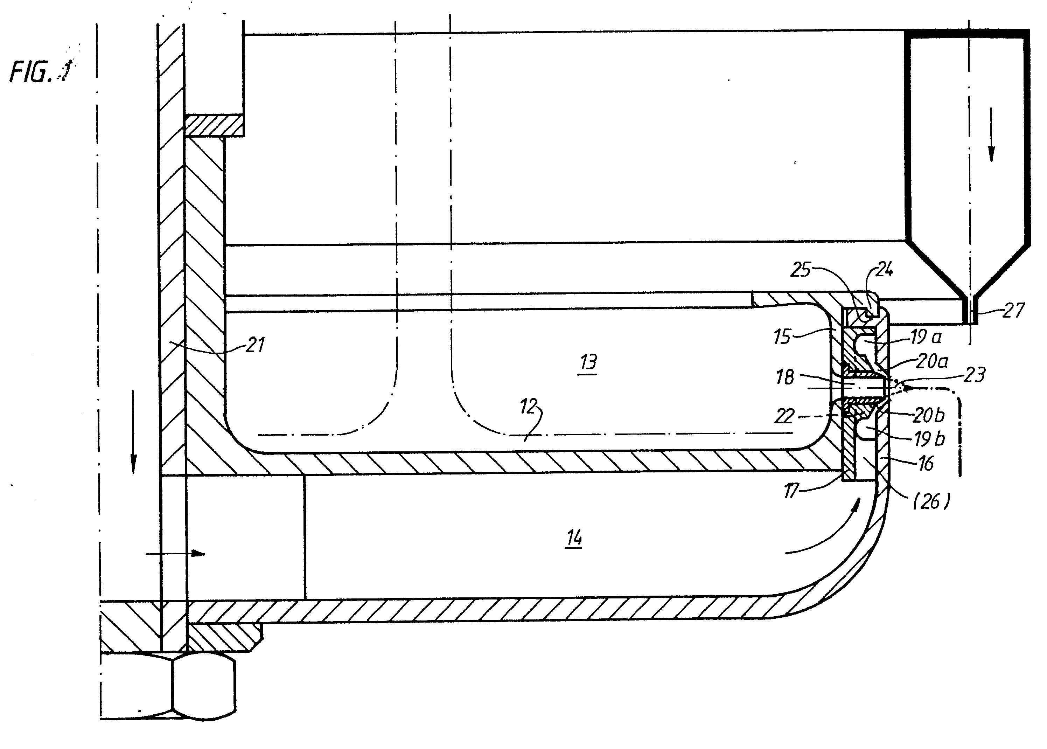

Die Erfindung ist in der Zeichnung an einem keinen Anspruch auf Vollständigkeit erhebenden Ausführungsbeispiel veranschaulicht und nachfolgend anhand derselben beschrieben. Dabei zeigt die Figur eine Hälfte der erfindungsgemäßen Vorrichtung in natürlichem Maßstab und im Vertikalschnitt.

Bei der in der Figur dargestellten Ausführungsform besteht der Rotor aus dem die flüssige Glasmasse 12 aufnehmenden Wannenteil 13 und dem Gasführungsteil 14. Dieser umschließt dabei den Wannenteil derart, daß zwischen der senkrechten Außenwand 15 des Wannenteils und der senkrechten Außenwand 16 des Gasführungsteils ein ringförmiger Zwischenraum entsteht. Dieser Zwischenraum nimmt einen allgemein mit 17 bezeichneten Düsenring auf, in den die Massedüsen 18 eingesetzt und die Ringgaskanäle 19a, 19b mit den Ringschlitz-Blasdüsen 20a, 20b eingearbeitet sind. Diese Einarbeitung bereitet auf der Drehbank insofern keine Schwierigkeit, als die Kanäle 19 und Düsen 20 nach außen offen sind und erst durch die Wand 16 des Gasführungsteils 14 geschlossen und vervollständigt werden.

Die Gasführung erfolgt längs der Pfeile durch die hohle Rotorwelle 21. Dabei wird das Gas im Gasführungsteil 14 nach außen in den Kanal 19b gepreßt und gelangt von hier teils durch die Ringschlitzdüse 20b direkt nach außen, teils über Steigkanäle 22 zwischen den Glasdüsen 18 in den Ringkanal 19a und damit in die Ringdüse 20a.

Dadurch wird die Wirkung des Blasdrucks verstärkt und die Blasdüsen werden, obwohl sie ihre Wirkung außerhalb der Vorrichtung entfalten, noch näher an die Glaskegel 23 mit der Folge intensiverer Ziehwirkung herangebracht. Da in diesem Fall die Ringschlitz-Blasdüsen sich synchron mit den Massedüsen drehen, ist jeder Massedüse ein Abschnitt der Ringschlitz-Blasdüsen zugeordnet.

Gehalten wird der Düsenring 17 bei dem dargestellten Beispiel in seiner Lage dadurch, daß ein umlaufender Vorsprung 24 des Deckels des Wannenteils 13 in eine Nut 25 in einer flanschartigen Verbreiterung der Außenwand des Gasführungsteils 14 eingreift. Auf diese Weise wird der verhältnismäßig einfach herzustellende Düsenring leicht auswechselbar, z.B. für den Fall, daß man zu Massedüsen anderen Durchmessers übergehen oder die Weite der Blasdüsen verändern will. Im Düsenring lassen sich aber auch die durch die heiße Glasschmelze besonderen Beanspruchungen ausgesetzten, z.B. 100 Massedüsen leichter als in de Rotorwand auswechseln.

Man kann die Schnittdarstellung der Figur aber auch anders als vorstehend beschrieben betrachten, nämlich in der Weise, daß um jede Massedüse 18 konzentrisch eine Ring-Blasdüse angeordnet ist, deren Achse mit der Achse der Massedüse zusammenfällt. Zu diesen einzelnen Ring-Blasdüsen würden dann aus dem Gaszuführungsteil 14 Steigkanäle 26 führen. Damit würde mit allerdings erhöhtem Herstellungsaufwand und einer eingeschränkten Zahl der Massedüsen eine besonders intensive Ziehwirkung durch einen von vorneherein hülsenförmigen Ziehstrom erzielt.

Ebenso wie sich die Massedüsen 18 und die Blasdüsen 20 bzw. 26 in einem Düsenring 17 gemäß der Figur zusammenfassen lassen, kann auch die zusätzliche, den erzeugten Faden nach unten ablenkende und eventuell ihn weiter ausziehende, parallel zur Rotorachse gerichtete, außerhalb des Rotors angeordnete Umlenkdüse 27 in den Düsenring integriert werden.

Bezugszeichenaufstellung
12 flüssige Glasmasse
13 Wannenteil
14 Gasführungsteil
15 senkrechte Außenwand (von 13)
16 senkrechte Außenwand (von 14)
17 Düsenring
18 Glasdüsen
19 Ring-Gaskanäle (a + b)
20 Ringschlitz-Blasdüsen (a + b)
21 Rotorwelle
22 Stichkanäle
23 Glaskegel
24 Vorsprung
25 Nut
26 Steigkanal
27 Umlenkdüse

## Patentansprüche

1. Vorrichtung zur Herstellung dünner Glasfasern, Keramikfasern und dergleichen, in der die flüssige Glasmasse oder Keramikmasse (12) in einem Rotor durch in seine Außenwand (15) ringförmig eingebrachte Massedüsen (18) durch Zentrifugalkraft in Einzelströme aufgeteilt wird, die nach dem Austritt Glaskegel (23) bilden, von denen durch einen diese allseitig erfassenden Gasstrom in Richtung der Massedüsenachse Glasfäden abgezogen werden, dadurch gekennzeichnet, daß für den Gasstrom im Bereich jeder Massedüse (18) wenigstens eine Blasdüse (20a, 20b) vorgesehen ist und daß der Rotor aus einem die Masse (12) aufnehmenden Wannenteil (13) und einem diesen umschließenden Gasführungsteil (14) aufgebaut ist, wobei im Zwischenraum zwischen der senkrechten Außenwand (15) des Wannenteils und der senkrechten Außenwand (16) des Gasführungsteils ein die Massedüsen (18) enthaltender Düsenring (17) angeordnet ist, der sich mit dem Rotor dreht.

2. Vorrichtung nach Anspruch 1, dadurch gekennzeichnet, daß die Massedüsen (18) und die Blasdüsen (20a, 20b) in dem Düsenring (17) zusammengefaßt sind.

3. Vorrichtung nach Anspruch 1 oder 2, dadurch gekennzeichnet, daß jeweils oberhalb und unterhalb der ringförmig angeordneten Massedüsen (18) eine ringförmige Blas-Schlitzdüse (20a, 20b) angeordnet ist.

4. Vorrichtung nach Anspruch 1 oder 2, dadurch gekennzeichnet, daß jeder Massedüse (18) eine sich umgebende und achsgleich mit ihr liegende Blas-Ringdüse zugeordnet ist.

5. Vorrichtung nach Anspruch 1, dadurch gekennzeichnet, daß die Ringgaskanäle (19a, 19b) und deren Blasdüsen (20a, 20b) durch die Außenwand (15) des Gasführungsteils (14) geschlossen und vervollständigt sind.

6. Vorrichtung nach Anspruch 1, dadurch gekennzeichnet, daß eine die gezogenen Fäden erfassende, abwärts gerichtete Umlenk-Blasdüse (27) vorgesehen ist, deren Austrittsschlitz auf einem Radius größer oder nicht wesentlich größer als der Abstand zwischen der Rotorachse und dem Ende der Glaskegel (23) liegt.

7. Vorrichtung nach Anspruch 1, gekennzeichnet durch einen Massedüsendurchmesser zwischen 3 und 6 mm bei einem Durchmesser der Rotorwand von 400 mm.

8. Vorrichtung nach einem der Ansprüche 1 bis 7, gekennzeichnet durch eingesetzte Massedüsen aus einer Edelmetall-Legierung.

9. Vorrichtung nach einem der Ansprüche 1 bis 8, gekennzeichnet durch einen aus einer Edelstahllegierung bestehenden Rotor, dessen Masseschmelze aufnehmender Teil mit Aluminiumoxid beschichtet ist.

## Claims

1. Apparatus for manufacturing thin glass fibres, ceramic fibres and the like in which the liquid glass or ceramic composition (12) is split in a rotor by means of composition nozzles (18) built annularly into the outer wall (15) of said rotor by centrifugal force into single streams which upon emerging form glass cones (23) from which glass threads are drawn off in the direction of the composition nozzle axis by means of a gas stream acting on all sides of said cones, characterised in that at least one blast nozzle (20a, 20b) is provided for the gas stream in the region of each composition nozzle (18) and the rotor comprises a tank portion (13) for accommodating the composition (12) and a gas-bearing portion (14) which encloses said portion (13), there being provided in the space between the vertical outer wall (15) of the tank portion and the vertical outer wall (16) of the gas-bearing portion a nozzle ring (17) containing the composition nozzles (18) which rotates with the rotor.

2. Apparatus according to claim 1, characterised in that the composition nozzles (18) and the blast nozzles (20a, 20b) are combined in the nozzle ring (17).

3. Apparatus according to claim 1 or 2, characterised in that a respective annular slit blast nozzle (20a, 20b) is disposed above and below the annularly disposed composition nozzles (18).

4. Apparatus according to claim 1 or 2, characterised in that there is associated with each composition nozzle (18) a tubular blast nozzle which surrounds and is coaxial to said composition nozzle (18).

5. Apparatus according to claim 1, characterised in that the annular gas channels (19a, 19b) and their blast nozzles (20a, 20b) are closed and completed by the outer wall (15) of the gas-bearing portion (14).

6. Apparatus according to claim 1, characterised in that there is provided a downward-directed deflection blast nozzle (27) which picks up the drawn threads and whose exit slot is located on a radius which is greater, though not substantially greater than the gap between the rotor axis and the end of the glass cones (23).

7. Apparatus according to claim 1, characterised by a composition nozzle diameter of between 3 and 6 mm in the case of a rotor wall diameter of 400 mm.

8. Apparatus according to any of claims 1 to 7, characterised by the use of composition nozzles made from a noble-metal alloy.

9. Apparatus according to any of claims 1 to 8, characterised by a rotor made from a high-grade steel alloy, the portion of said rotor accommodating the composition melt being coated with aluminium oxide.

## Revendications

1. Dispositif destiné à la fabrication de fibres minces de verre, de céramique et similaires, dans lequel la masse liquide de verre ou de céramique (12) est subdivisée en courants séparés, sous l'effet de la force centrifuge, dans un rotor, à travers des filières (18) disposées en anneau dans sa paroi extérieure (15), courants qui, après leur sortie, forment des cônes de verre (23) desquels sont étirés des fils de verre, en direction de l'axe des filières, à l'aide d'un courant gazeux les entourant de tous côtés, caractérisé en ce qu'il est prévu au moins une buse de soufflage (20a, 20b) pour le courant gazeux dans la zone de chaque filière (18), et en ce que le rotor est constitué d'un élément de cuve (13) recevant la masse (12), et d'un élément de guidage du gaz (14) entourant celui-ci, un anneau de filières (17), contenant les filières (18), étant disposé dans l'espace compris entre la paroi extérieure (15) verticale de l'élément de cuve et la paroi extérieure (16) verticale de l'élément de guidage du gaz, anneau de filières qui tourne avec le rotor.

2. Dispositif selon la revendication 1, caractérisé en ce que les filières (18) et les buses de soufflage (20a, 20b) sont regroupées dans l'anneau (17).

3. Dispositif selon la revendication 1 ou 2, caractérisé en ce qu'au-dessus et au-dessous des filières (18) disposées en anneau, est placée une buse plate de soufflage (20a, 20b), de forme annulaire.

4. Dispositif selon la revendication 1 ou 2, caractérisé en ce qu'à chaque filière (18) est associée une buse plate de soufflage qui l'entoure et qui est disposée sur le même axe.

5. Dispositif selon la revendication 1, caractérisé en ce que les canaux de gaz annulaires (19a, 19b) et leurs buses de soufflage (20a, 20b) sont fermés et complétés par la paroi extérieure (15) de l'élément de guidage du gaz (14).

6. Dispositif selon la revendication 1, caractérisé en ce qu'il est prévu une buse de soufflage de déviation (27), dirigée vers le bas, agissant sur les fils étirés, dont la fente de sortie se situe sur un rayon supérieur, mais de peu, à la distance séparant l'axe du rotor de l'extrémité du cône de verre (23).

7. Dispositif selon la revendication 1, caractérisé par un diamètre de filière compris entre 3 et 6 mm pour un diamètre de la paroi du rotor de 400 mm.

8. Dispositif selon l'une des revendications 1 à 7, caractérisé par des filières réalisées dans un alliage de métal précieux.

9. Dispositif selon l'une des revendications 1 à 8, caractérisé par un rotor réalisé dans un alliage de métal précieux, dont l'élément recevant la masse en fusion est recouvert d'une couche d'oxyde d'aluminium.

FIG. 1

EP 0 141 257 B1